# EUROPÄISCHE PATENTSCHRIFT

(11) **EP 3 347 627 B1**
(45) Veröffentlichungstag und Bekanntmachung des Hinweises auf die Patenterteilung: **11.11.2020**
(21) Anmeldenummer: 16760060.0
(22) Anmeldetag: 01.09.2016
(51) Int. Cl.: F16J 1/22, F16J 7/00

(54) **KOMBINATION EINES KOLBENS UND EINES PLEUELS**
COMBINATION OF A PISTON AND A ROD
COMBINAISON D'UN PISTON ET D'UNE BIELLE

(30) Priorität: 07.09.2015 DE 102015114952
(43) Veröffentlichungstag der Anmeldung: 18.07.2018
(73) Patentinhaber: Volkswagen Aktiengesellschaft, 38440 Wolfsburg (DE)
(72) Erfinder: URZUA TORRES, Paulo, 38446 Wolfsburg (DE); BIER, Martin, 38536 Meinersen (DE); WOBLEWSKI, Rouven, 38104 Braunschweig (DE)
(74) Vertreter: Bungartz, Florian
(86) Internationale Anmeldenummer: PCT/EP2016/070587
(87) Internationale Veröffentlichungsnummer: WO 2017/042080

(56) Entgegenhaltungen:
- EP-A1- 1 538 373
- WO-A1-2015/039080

## Beschreibung

Die Erfindung betrifft eine Kombination eines Kolbens und eines schwenkbar in einer Lageraufnahme des Kolbens gelagerten Pleuels, wobei der Kolben ein den Kolbenboden ausbildendes Kolbenoberteil und ein zumindest einen Abschnitt des Kolbenhemds ausbildendes Kolbenunterteil umfasst, die im Rahmen einer Montage des Triebwerks verbindbar sind, und wobei ein Pleuelkopf des Pleuels in einer ersten Drehausrichtung in die Lageraufnahme einsetzbar ist und in einer zweiten, um einen Winkelabstand um die Längsachse verdrehten Drehausrichtung gegen ein Lösen aus der Lageraufnahme gesichert ist.

Eine Kombination eines Kolbens und eines schwenkbar in einer Lageraufnahme des Kolbens gelagerten Pleuels kommt beispielsweise in dem Kurbeltrieb einer Brennkraftmaschine zum Einsatz. Diese dient dort dazu, zyklische Hin-und-Her-Bewegungen des Kolbens, die durch Verbrennungen von Kraftstoff-Frischgas-Gemisch in unter anderem von dem oder den Kolben der Brennkraftmaschine begrenzten Brennräumen bewirkt werden, in eine Rotationsbewegung einer Kurbelwelle des Kurbeltriebs zu übersetzen.

Eine Kombination eines Kolbens und eines Pleuels gemäß der oben genannten Art ist aus der EP 1 538 373 A1 bekannt. Dazu ähnliche Kombinationen von Kolben und Pleueln, jedoch ohne zweiteilige Ausgestaltung des Kolbens, sind zudem in der US 2015/0075456 A1 sowie der WO 2011/001017 A1 offenbart. Die bei den Kombinationen in den genannten Druckschriften jeweils vorgesehene formschlüssige und gleichzeitig schwenkbare Befestigung des Pleuelkopfs in der Lageraufnahme des Kolbens wird durch eine Verdrehung des Pleuels um seine Längsachse um beispielsweise ca. 90° erreicht. Dies gewährleistet eine einfache Montage und ermöglicht zudem den Verzicht auf einen Kolbenbolzen, der noch regelmäßig als Verbindungselement zwischen einem Kolben und einem dazugehörigen Pleuel dient. Durch einen Verzicht auf einen Kolbenbolzen kann das Gesamtgewicht der Kombination aus Kolben und Pleuel vergleichsweise gering gehalten werden.

Bei den aus der EP 1 538 373 A1, der US 2015/0075456 A1 sowie der WO 2011/001017 A1 bekannten Kombinationen von Kolben und Pleueln wird der jeweilige Pleuel nach dessen Verdrehung in eine formschlüssig sichernde Drehausrichtung mittels separater Sicherungselemente gegen ein ungewolltes Zurückdrehen und damit gegen ein Lösen von dem Kolben gesichert. In der Kombination gemäß der EP 1 538 373 A1 sind hierfür beispielsweise drei Verschraubungen für jedes der insgesamt zwei Sicherungselemente vorgesehen. Damit ist ein nicht unerheblicher Montageaufwand verbunden.

Bei der Kombination gemäß der EP 1 538 373 A1 ist weiterhin vorgesehen, dass die zwei Teile des Kolbens über eine Vielzahl von Verschraubungen miteinander verbunden sind, was ebenfalls mit einem erheblichen Montageaufwand verbunden ist.

Ausgehend von diesem Stand der Technik lag der Erfindung die Aufgabe zugrunde, eine Kombination eines Kolbens und eines Pleuels anzugeben, die relativ einfach montierbar ist. Weiterhin sollte sich die Kombination aus Kolben und Pleuel möglichst auch durch ein geringes Gesamtgewicht und/oder durch eine gute thermische Belastbarkeit auszeichnen.

Diese Aufgabe wird mittels einer Kombination eines Kolbens und eines Pleuels gemäß dem Patentanspruch 1 gelöst. Ein Verfahren zur Montage einer solchen Kombination ist Gegenstand des Patentanspruchs 13. Vorteilhafte Ausgestaltungen der erfindungsgemäßen Kombination sowie bevorzugte Ausführungsformen des erfindungsgemäßen Verfahrens sind Gegenstände der weiteren Patentansprüche und ergeben sich aus der nachfolgenden Beschreibung der Erfindung.

Eine gattungsgemäße Kombination eines Kolbens und eines schwenkbar in einer Lageraufnahme des Kolbens gelagerten Pleuels, bei der der Kolben ein den Kolbenboden (und vorzugsweise auch die Lageraufnahme) ausbildendes Kolbenoberteil und ein zumindest einen Abschnitt des Kolbenhemds ausbildendes Kolbenunterteil umfasst, die im Rahmen einer Montage der Kombination verbindbar sind, und bei der ein Pleuelkopf des Pleuels in einer ersten Drehausrichtung (relativ zu dem Kolbenoberteil) in die Lageraufnahme einsetzbar ist und in einer zweiten, (relativ zu der ersten Drehausrichtung) um einen Winkelabstand um die Längsachse (beispielsweise um ca. 90°) verdrehten Drehausrichtung gegen ein Lösen aus der Lageraufnahme gesichert ist, ist erfindungsgemäß vorgesehen, dass der Pleuel nach einer Montage der Kombination durch das dann mit dem Kolbenoberteil verbundene Kolbenunterteil gegen ein Verdrehen von der zweiten Drehausrichtung bis in die erste Drehausrichtung gesichert ist, indem das Kolbenunterteil einen Vorsprung ausbildet, der nach einer Montage der Kombination in einen Abschnitt der Lageraufnahme eingreift, in dem ein Abschnitt des Pleuelkopfs in der ersten Drehausrichtung angeordnet und in der zweite Drehausrichtung nicht angeordnet ist. Ein Zurückdrehen des Pleuelkopfs bis in die erste Drehausrichtung wird dabei durch ein Anschlagen des entsprechenden Abschnitts des Pleuelkopfs an dem in dem entsprechenden Abschnitt der Lageraufnahme angeordneten Vorsprung des Kolbenunterteils verhindert.

Als "Kolbenboden" wird die von dem Pleuel abgewandte, quer und insbesondere senkrecht zu der Längsachse des Kolbens ausgerichtete, vorzugsweise kreisförmig berandete Oberfläche verstanden, die für einen Kontakt mit einem eine Bewegung des Kolbens in einem Zylinder bewirkenden Medium vorgesehen ist.

Als "Kolbenhemd" wird die für einen Kontakt mit einem Zylinder, in dem der Kolben geführt werden soll, vorgesehene Oberfläche, die sich gegebenenfalls aus mehreren Teilflächen zusammensetzt, verstanden.

Aufgrund der erfindungsgemäßen Sicherung des Pleuels in der zweiten, den Pleuelkopf vorzugsweise formschlüssig in der Lageraufnahme des Kolbens fixierenden Drehausrichtung gegen ein ungewolltes Zurückdrehen bis in die erste Drehausrichtung mittels des Kolbenunterteils, nachdem dieses im Rahmen der Montage der Kombination mit dem Kolbenoberteil verbunden wurde, kann auf eine Montage von einem oder mehreren separaten Sicherungselementen verzichtet werden. Die Montage einer solchen Kombination eines Kolbens und eines Pleuels kann auf diese Weise im relevanten Maße vereinfacht werden.

Ein erfindungsgemäßes Verfahren zur Montage einer solchen Kombination eines Kolbens und eines Pleuels kann demnach vorsehen, dass
- der Pleuelkopf in der ersten Drehausrichtung in die Lageraufnahme des Kolbens eingesetzt wird,
- der Pleuelkopf anschließend bis in die zweite Drehausrichtung verdreht wird, wobei vorzugsweise das Kolbenunterteil gemeinsam mit dem Pleuel verdreht wird, und
- daran anschließend das Kolbenunterteil mit dem Kolbenoberteil verbunden wird.

Dabei sind die Bewegungsanweisungen relativ zwischen Pleuel und Kolben zu verstehen, so dass für die Montageschritte sowohl ausschließlich der Pleuel als auch ausschließlich der Kolben als auch beide Komponenten bewegt werden können.

In einer bevorzugten Ausgestaltung der erfindungsgemäßen Kombination kann vorgesehen sein, dass der Pleuel einen teilkugelförmigen Pleuelkopf mit zumindest einer seitlichen Abflachung, vorzugsweise mit zwei parallel verlaufenden seitlichen Abflachungen aufweist. Ein solcher Pleuelkopf kann mit einer entsprechenden Lageraufnahme kombiniert werden, die ein teilkugelförmiges Innenvolumen zur Aufnahme des teilkugelförmigen Pleuelkopfs ausbildet, wodurch die Schwenkbarkeit des Pleuelkopfs innerhalb der Lageraufnahme gewährleistet werden kann. Die Lageraufnahme kann weiterhin eine Montageöffnung umfassen, durch die der Pleuel in der ersten Drehausrichtung infolge der Abflachung(en) in das Innenvolumen der Lageraufnahme einsetzbar ist, während dies in der zweiten Drehausrichtung nicht möglich ist (wodurch somit der Pleuelkopf innerhalb der Lageraufnahme gegen ein Lösen gesichert ist). Eine solche Kombination von Pleuelkopf und Lageraufnahme gewährleistet in vorteilhafter Weise eine Montage der Kombination durch ein einfaches Verdrehen von Pleuel und Kolben zueinander (um die Längsachse des Pleuels), gleichzeitig eine Schwenkbarkeit des Pleuels relativ zu dem Kolben um nicht nur eine sondern eine (gegebenenfalls beliebige) Vielzahl von Achsen sowie weiterhin gleichzeitig eine verlässliche formschlüssige Sicherung des Pleuels und des Kolbens gegen ein Lösen voneinander.

Ergänzend dazu kann auch vorgesehen sein, dass das Kolbenunterteil eine zentrale Durchgangsöffnung ausbildet, die mit einem Abschnitt des Pleuelkopfs und/oder einem Abschnitt eines Schafts des Pleuels (Pleuelschafts) eine gegen ein (zu weites) Verdrehen um eine Längsachse des Pleuels sichernde formschlüssige Verbindung ausbildet. Ein Zurückdrehen des Pleuelkopfs bis in die erste Drehausrichtung wird bei einer solchen Ausgestaltung der erfindungsgemäßen Kombination (auch) durch ein Anschlagen des entsprechenden Abschnitts des Pleuelkopfs und/oder des Pleuelschafts an Wandabschnitte, die die entsprechende Durchgangsöffnung in dem Kolbenunterteil begrenzen, verhindert.

In einer weiterhin bevorzugten Ausgestaltung einer erfindungsgemäßen Kombination kann vorgesehen sein, dass auch das Kolbenoberteil einen Abschnitt des Kolbenhemds ausbildet. Bei einer solchen Ausgestaltung der erfindungsgemäßen Kombination kann dann vorteilhafterweise zudem noch vorgesehen sein, dass zwischen dem von dem Kolbenoberteil ausgebildeten Abschnitt des Kolbenhemds und dem von dem Kolbenunterteil ausgebildeten Abschnitt des Kolbenhemds ein zumindest teilweise, vorzugsweise vollständig um die Längsachse des Kolbens umlaufender Spalt ausgebildet ist. Die Mindestbreite des Spalts kann dabei vorzugsweise mindestens 1% der Gesamtlänge des Kolbens entsprechen. Ein derart ausgebildeter Kolben kann zum einen vorteilhaft hinsichtlich des für diesen erreichbaren (relativ geringen) Gewichts sein, weil zum Erreichen einer ausreichend kippstabilen Führung des Kolbens in einem Zylinder (beispielsweise einer Brennkraftmaschine) eine definierte Mindestlänge (Erstreckung entlang der Längsachse des Kolbens) erforderlich sein kann, die insbesondere auch in einem definierten Mindestverhältnis zu dem Kolbendurchmesser stehen kann. Durch eine solche Ausgestaltung eines Kolbens mit einem vorzugsweise vollständig um dessen Längsachse umlaufenden Spalt in dem Kolbenhemd kann eine solche Mindestlänge des Kolbens mit vergleichsweise geringem Materialeinsatz erreicht werden, was mit einem entsprechend geringen Gewicht für den Kolben einhergehen kann. Weiterhin kann ein solcher Spalt eine Zufuhr eines Schmier- und/oder Kühlmittels zu Abschnitten der erfindungsgemäßen Kombination und insbesondere auch zu der Lagerung des Pleuelkopfs in der Lageraufnahme positiv beeinflussen.

In einer weiterhin bevorzugten Ausgestaltung der erfindungsgemäßen Kombination kann vorgesehen sein, dass das Kolbenoberteil einen sich mit zunehmender Entfernung von dem Kolbenboden verjüngenden Kolbengrundkörper aufweist, dessen freies Ende zur Verbindung mit dem Kolbenunterteil vorgesehen ist. Auf diese Weise kann mit einem vergleichsweise geringem Materialaufwand ein strukturell ausreichend stabiler Kolben ausgebildet werden.

Die thermische Belastbarkeit eines solchen Kolbens einer erfindungsgemäßen Kombination kann dann noch in vorteilhafterweise dadurch verbessert werden, wenn die Außenseite des Kolbengrundkörpers mit sich entlang der Längsachse des Kolbens erstreckenden (d.h. zumindest eine parallel zur Längsachse ausgerichtete Richtungskomponente aufweisenden) Rippen versehen ist. Dabei können die Rippen (beziehungsweise zumindest eine Längsachse davon) besonders bevorzugt jeweils in einer Ebene verlaufen, die auch die Längsachse des Kolbens oder zumindest des Kolbengrundkörpers umfasst.

Eine einfache Montage der erfindungsgemäßen Kombination bei gleichzeitig ausreichend sicherer Verbindung zwischen dem Kolbenoberteil und dem Kolbenunterteil kann dadurch erreicht werden, dass eine Verbindung zwischen diesen Komponenten als Presspassung ausgebildet ist. Dabei weist eine vorzugsweise im Querschnitt kreisförmige Aufnahmeöffnung des Kolbenoberteils oder des Kolbenunterteils definiert geringfügig abweichende Dimensionen zu einem dazugehörigen Einsteckabschnitt des Kolbenunterteils oder des Kolbenoberteils auf, wobei eine kraftschlüssige Fixierung (und gegebenenfalls auch ein Einbringen) des Einsteckabschnitts in die Aufnahmeöffnung auf einer elastischen Deformation des Einsteckabschnitts und des die Aufnahmeöffnung ausbildenden Komponentenabschnitts beruht. Dabei kann insbesondere vorgesehen sein, dass für das Einbringen des Einsteckabschnitts der die Aufnahmeöffnung ausbildende Komponentenabschnitt (ggf. stärker als der Einsteckabschnitt) erwärmt und/oder der Einsteckabschnitt (ggf. stärker als der die Aufnahmeöffnung ausbildende Komponentenabschnitt) abgekühlt wird, wodurch ermöglicht wird, den Einsteckabschnitt ohne elastische Deformation in die Aufnahmeöffnung einzubringen. Eine solche elastische Deformation kann sich dann erst nach einer Angleichung der Temperaturen des Einsteckabschnitts und des die Aufnahmeöffnung ausbildenden Komponentenabschnitts einstellen. Alternativ oder ergänzend dazu sind jedoch auch andere Verbindungsarten, wie formschlüssige (z.B. durch Verschraubung) oder stoffschlüssige (z.B. durch Verschweißen oder Verlöten) vorteilhaft umsetzbar.

In einer insbesondere hinsichtlich des erreichbaren Bauteilgewichts vorteilhaften Ausgestaltung der erfindungsgemäßen Kombination kann vorgesehen sein, dass das Kolbenunterteil einen zentralen Befestigungsteil und einen einen Abschnitt des Kolbenhemds ausbildenden Außenteil umfasst, wobei zwischen dem Befestigungsteil und dem Außenteil eine sich entlang der Längsachse erstreckende Durchgangsöffnung ausgebildet ist.

Weiterhin bevorzugt kann vorgesehen sein, dass das Kolbenunterteil in zwei voneinander separierten Bereichen, die auf gegenüberliegenden Seiten einer Betriebsschwenkachse für den Pleuel angeordnet sind, Abschnitte des Kolbenhemds ausbilden. Dabei wird als "Betriebsschwenkachse" diejenige Achse verstanden, um die der Pleuel im Betrieb der Kombination in beispielsweise einer Brennkraftmaschine relativ zu dem Kolben verschwenkt wird. Die Betriebsschwenkachse kann dabei insbesondere parallel zu der Längsachse eines Pleuelauges angeordnet sein, dass als Lageraufnahme (für beispielsweise einen Kurbelzapfen einer Kurbelwelle) an dem von dem Pleuelkopfs beabstandeten Ende des Pleuels angeordnet ist. Durch eine solche Ausgestaltung der erfindungsgemäßen Kombination kann trotz eines relativ geringen Materialeinsatzes und eines entsprechend geringen Gewichts eine sichere Abstützung von Kippmomenten, die durch eine Schrägstellung der Längsachsen von Kolben und Pleuel zueinander im Betrieb der Kombination entstehen, sicher an der Wandung eines Zylinders, in dem der Kolben geführt ist, gewährleistet werden.

Eine besonders leichte Ausgestaltung für den Kolben kann dann noch dadurch erreicht werden, dass von dem Befestigungsteil zwei (teil-)ringförmige Teilelemente des Außenteils abgehen. Diese zwei (teil-)ringförmige Teilelemente bilden dann die zwei Bereiche aus, die Abschnitte des Kolbenhemds darstellen.

In einer weiterhin bevorzugten Ausgestaltung der erfindungsgemäßen Kombination kann vorgesehen sein, dass der von dem Kolbenunterteil ausgebildete Abschnitt des Kolbenhemds durch mindestens einen Spalt in mindestens zwei Teilabschnitte separiert ist. Dabei kann der Spalt (bzw. dessen Mittellängsachse) vorzugsweise in einer senkrecht zur Längsachse des Kolbens ausgerichteten Ebene verlaufen. Durch einen solchen Spalt in dem von dem Kolbenunterteil ausgebildeten Abschnitt des Kolbenhemds kann insbesondere eine Zufuhr eines Schmier- und/oder Kühlmittels zu innenliegenden Komponenten und/oder Abschnitten der erfindungsgemäßen Kombination verbessert werden.

Für eine vorteilhafte Zufuhr eines Kühl- und/oder Schmiermittels zu der Lagerung des Pleuelkopfs innerhalb der Lageraufnahme des Kolbens kann vorzugsweise vorgesehen sein, dass zumindest eine die Lageraufnahme mit einer Außenseite des Kolbenoberteils und/oder einer Außenseite des Kolbenunterteils verbindende Zuführöffnung für ein Schmiermittel vorgesehen ist.

Die erfindungsgemäße Kombination aus Kolben und Pleuel kann vorzugsweise Teil eines Kurbeltriebs sein, der zumindest noch eine Kurbelwelle umfasst. Weiterhin kann die erfindungsgemäße Kombination oder ein diese Kombination umfassender Kurbeltrieb vorzugsweise Teil einer Brennkraftmaschine sein, die weiterhin bevorzugt für die Bereitstellung einer Fahrantriebsleistung für ein Kraftfahrzeug, insbesondere für ein radbasiertes Kraftfahrzeug (insbesondere PKW oder Lkw), vorgesehen sein kann. Die Erfindung betrifft demnach auch einen entsprechenden Kurbeltrieb, eine entsprechende Brennkraftmaschine und/oder ein entsprechendes Kraftfahrzeug. Die erfindungsgemäße Kombination aus Kolben und Pleuel ebenso wie ein eine solche Kombination umfassender Kurbeltrieb kann jedoch auch für beliebige andere Verwendungszwecke, wie beispielsweise in einem Kolbenverdichter, vorteilhaft zur Anwendung kommen.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:

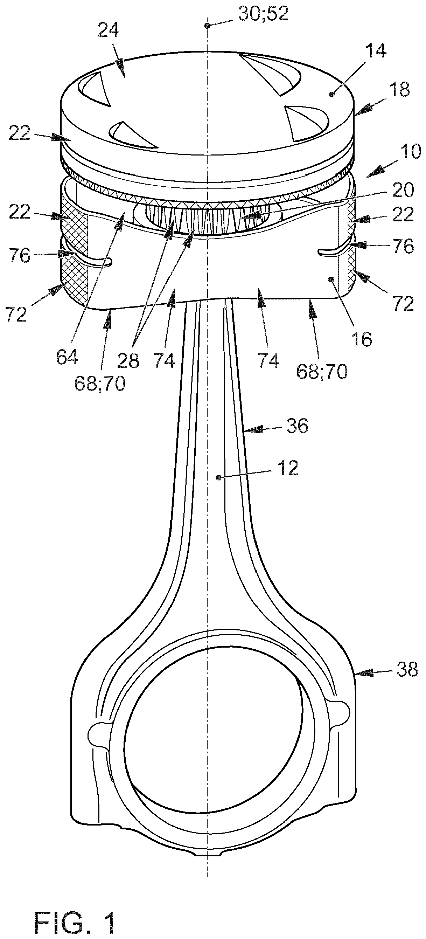

- Fig. 1:: eine erfindungsgemäße Kombination aus Kolben und Pleuel im montierten Zustand in einer ersten perspektivischen Ansicht;
- Fig. 2:: die Kombination in einer zweiten perspektivischen Ansicht;
- Fig. 3:: die Kombination in einer ersten Seitenansicht;
- Fig. 4:: die Kombination in einem ersten Längsschnitt;
- Fig. 5:: die Kombination in einer zweiten Seitenansicht;
- Fig. 6:: die Kombination in einem zweiten Längsschnitt;
- Fig. 7:: die Kombination im nicht-montierten Zustand in einer perspektivischen Ansicht;
- Fig. 8:: einen ersten Schritt bei der Montage der Kombination;
- Fig. 9:: einen zweiten Schritt bei der Montage der Kombination;
- Fig. 10:: einen dritten Schritt bei der Montage der Kombination; und
- Fig. 11:: einen vierten Schritt bei der Montage der Kombination.

Die Zeichnungen zeigen eine erfindungsgemäße Kombination eines Kolbens 10 und eines Pleuels 12 für beispielsweise einen Kurbeltrieb einer Brennkraftmaschine eines Kraftfahrzeugs.

Der Kolben 10 umfasst ein einteiliges Kolbenoberteil 14 sowie ein ebenfalls einteiliges Kolbenunterteil 16, die im Rahmen einer Montage der Kombination kraftschlüssig miteinander verbunden werden.

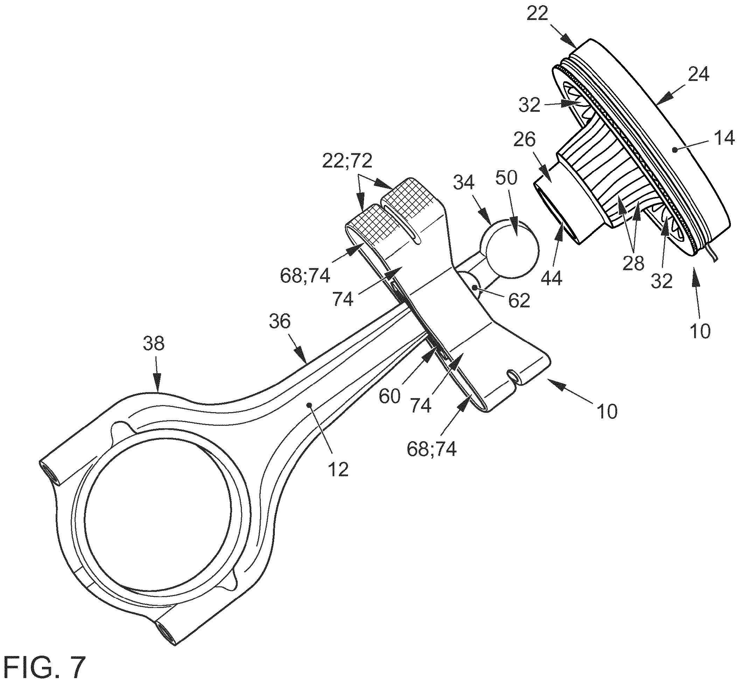

Das Kolbenoberteil 14 bildet einen Kolbenkopf 18 und einen Kolbengrundkörper 20 aus. Der Kolbenkopf 18 weist eine quasi-zylindrische Außenkontur auf, wobei die Mantelfläche dieser zylindrischen Außenkontur einen Abschnitt des Kolbenhemds 22 des Kolbens 10 ausbildet. In diese Mantelfläche sind umlaufende Nuten, die für die Aufnahme von Kolbenringen vorgesehen sind, eingebracht. Die bezüglich des Kolbenunterteils 16 (und auch des Pleuels12) distale (geschlossene) Stirnseite des Kolbenoberteils 14 stellt den Kolbenboden 24 des Kolbens 10 dar. Auf der von dem Kolbenboden 24 abgewandten Seite geht der Kolbenkopf 18 in den Kolbengrundkörper 20 über. Ausgehend von diesem Übergang und damit mit zunehmender Entfernung von dem Kolbenboden 24 ist der Kolbengrundkörper 20 sich verjüngend (und damit mit sich verkleinernder Querschnittsfläche) ausgebildet. Das freie Ende des Kolbengrundkörpers 20 bildet einen umlaufenden Befestigungsabschnitt 26 mit außenseitiger Kontaktfläche (d.h. einen Einsteckabschnitt) sowie mit kreisförmigem Querschnitt zur Verbindung mit dem Kolbenunterteil 16 aus (vgl. Fig. 7 bis 10).

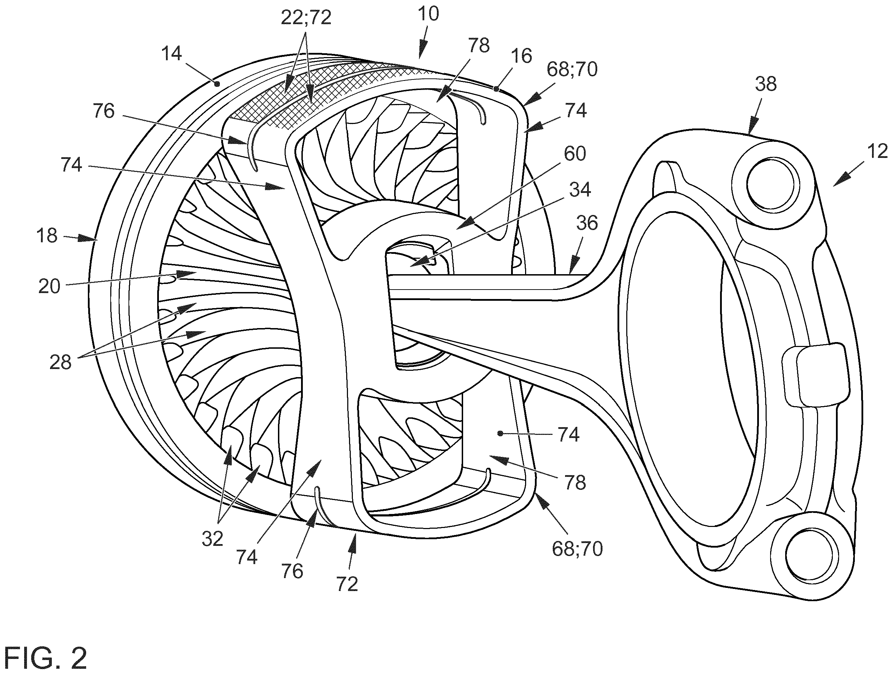

Die Außenseite des Kolbengrundkörpers 20 wird von einer Vielzahl von Rippen 28 ausgebildet, die sich entlang der Längsachse 30 des Kolbens 10 erstrecken und deren Querschnitte (quer zu ihren Längserstreckungen) in etwa dreieckig ausgebildet sind. Dabei ist vorgesehen, dass die außen liegenden Kanten der Rippen 28 jeweils in einer Ebene verlaufenden, in der auch die Längsachse 30 des Kolbens 10 verläuft. Neben dem Kolbengrundkörper 20 bildet auch der Kolbenkopf 18 auf der Innenseite des kragenförmigen Abschnitts, der einen umlaufenden Abschnitt des Kolbenhemds 22 ausbildet, Rippen 32 aus, die ebenfalls eine radiale Ausrichtung bezüglich der Längsachse 30 des Kolbens 10 aufweisen (vgl. Fig. 2, 4 und 6). Durch die Ausgestaltung des Kolbenoberteils 14 mit den Rippen 28, 32 wird für die entsprechenden Außenflächen davon, die weder (entsprechend dem Kolbenboden 24) für einen Kontakt mit einem eine Bewegung des Kolbens 10 bewirkenden Medium noch (entsprechend dem von dem Kolbenkopf18 ausgebildeten Abschnitt des Kolbenhemds22) für einen Kontakt mit einer Wandung eines zur Aufnahme des Kolbens 10 vorgesehenen Zylinders (nicht dargestellt) vorgesehen sind, eine möglichst große Oberfläche generiert, die sich positiv auf einen Wärmeübergang von dem Kolbenoberteil 14 auf ein diesen umgebendes Medium und insbesondere eine zu Kühlungszwecken auf diese Außenflächen aufgebrachte Kühlflüssigkeit auswirkt.

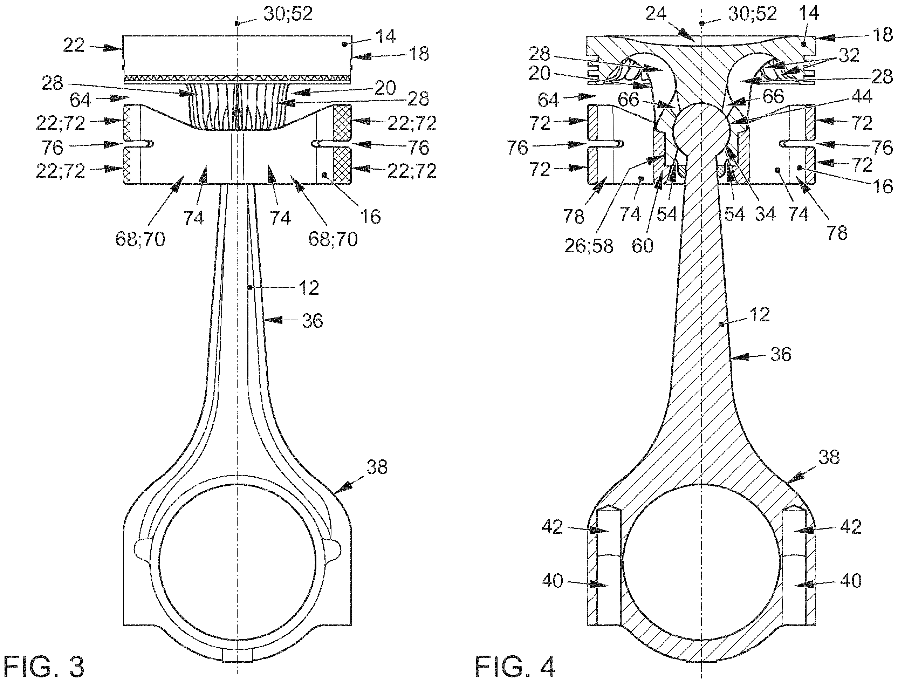

Der Pleuel 12 umfasst einen Pleuelkopf 34, einen Pleuelschaft 36 sowie ein Pleuelauge 38, wobei der Pleuelkopf 34 und das Pleuelauge 38 jeweils an einem der beiden Enden des Pleuelschafts 36 angeordnet sind. Der Pleuel 12 ist in den Zeichnungen noch einteilig dargestellt. Vorgesehen ist jedoch, den Pleuel 12 in bekannter Weise, beispielsweise durch Cracken, entlang einer radial bezüglich der Längsachse des Pleuelauges 38 verlaufenden Trennebene zu trennen, um einen Hubzapfen einer Kurbelwelle (nicht dargestellt) innerhalb des Pleuelauges 38 lagern zu können. Durch die Trennung des Pleuels 12 im Bereich des Pleuelauges 38 wird dieser in einen Hauptteil, der den Pleuelkopf 34, den Pleuelschaft 36 sowie einen Teil des Pleuelauges 38 umfasst, sowie in einen den anderen Teil des Pleuelauges 38 ausbildenden Pleueldeckel unterteilt. Nach der Anordnung des entsprechenden Hubzapfens innerhalb des Pleuelauges 38 kann der Pleueldeckel über Schraubverbindungen mit dem Hauptteil des Pleuels 12 verbunden werden. Der Pleueldeckel weist dazu Durchgangsöffnungen 40 auf, die mit Innengewinden 42 in dem Hauptteil des Pleuels 12 fluchtend ausgerichtet sind (vgl. Fig. 4). Diese Durchgangsöffnungen 40 sowie diese Innengewinde 42 dienen der Aufnahme von jeweils einer Schraube.

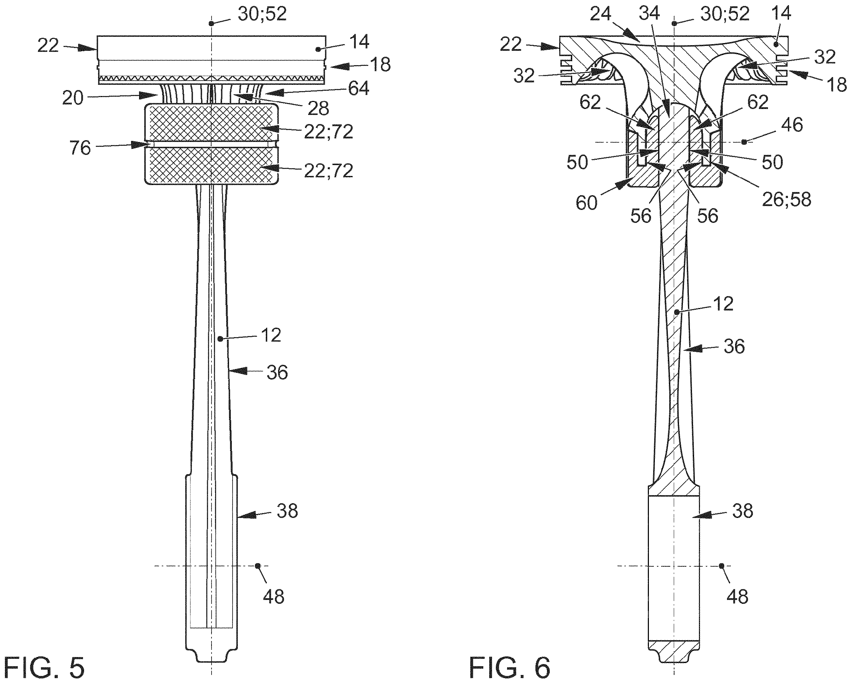

Im Bereich des freien Endes des Kolbengrundkörpers 20 des Kolbenunterteils 16 ist eine Lageraufnahme 44 für den Pleuelkopf 34 ausgebildet. Wie sich insbesondere aus den Fig. 4 und 6 ergibt, wird die Lageraufnahme 44 von einem teilkugelförmigen Innenvolumen ausgebildet, das über eine Montageöffnung mit der Stirnseite an dem freien Ende des Kolbengrundkörpers 20 verbunden ist. Das teilkugelförmige Innenvolumen der Lageraufnahme 44 dient der Aufnahme des Pleuelkopfs 34, der hierzu entsprechend teilkugelförmig ausgebildet ist. Dadurch wird ermöglicht, den Pleuelkopf 34 zumindest in Grenzen um eine beliebige Anzahl von Drehachsen innerhalb der Lageraufnahme 44 des Kolbens 10 zu verdrehen. Dies ermöglicht zum einen, den Pleuel 12 um eine Betriebsschwenkachse 46, die in paralleler Ausrichtung zu der Längsachse 48 des Pleuelauges 38 zentral durch den Pleuelkopf 34 hindurch verläuft (vgl. Fig. 6), zu verschwenken, wie dies im Rahmen einer Nutzung der Kombination aus Kolben 10 und Pleuel 12 als Teil eines Kurbeltriebs erforderlich ist. Zum anderen wird dadurch ermöglicht, den Pleuelkopf 34 formschlüssig innerhalb der Lageraufnahme 44 zu fixieren.

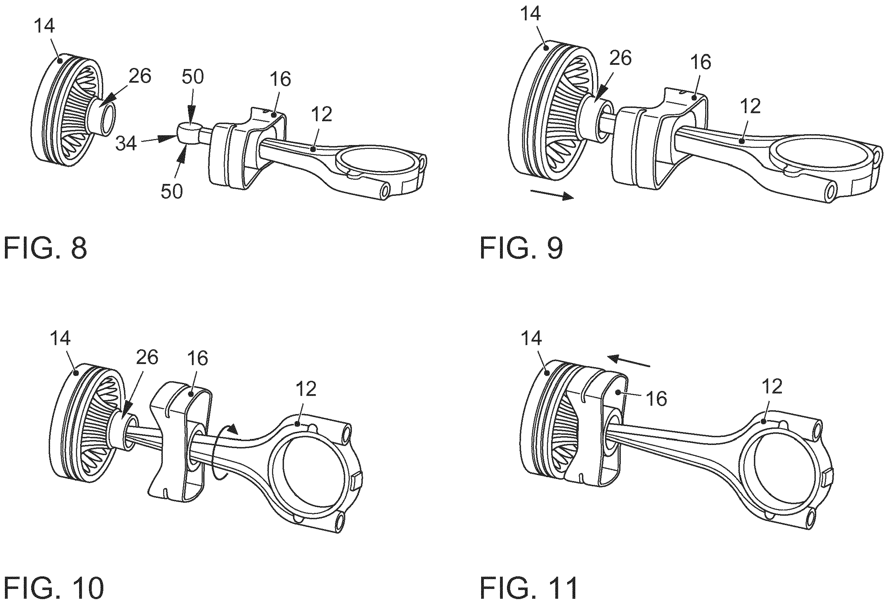

Dazu ist im Rahmen der Montage der Kombination vorgesehen, den Pleuel 12 in einer ersten Drehausrichtung relativ zu dem Kolben 10 zu positionieren (vgl. Fig. 8). Das Kolbenunterteil 16 ist dabei bereits ausgehend von dem Pleuelkopf 34 auf den Pleuelschaft 36 aufgeschoben worden. In dieser ersten Drehausrichtung ist der Pleuelkopf 34 durch die Montageöffnung bis in das teilkugelförmigen Innenvolumen der Lageraufnahme 44einschiebbar, weil zwei parallel verlaufende seitliche Abflachungen 50 des Pleuelkopfs 34 eine minimale Breite definieren, die etwas kleiner als der minimale Abstand zwischen zwei ebenen Begrenzungswänden 54 der Montageöffnung ist. Diese minimale Breite des Pleuelkopfs 34 ist zudem deutlich kleiner als der Durchmesser des teilkugelförmigen Abschnitts des Pleuelkopfs 34 (in der senkrecht zu der Längsachse 52 des Pleuels gelegenen Ebene). Die beiden ebenen Begrenzungswände 54 der Montageöffnung sind über teilzylindrische Begrenzungswände 56 miteinander verbunden, deren Durchmesser etwas größer als der genannte Durchmesser des teilkugelförmigen Abschnitts des Pleuelkopfs 34 ist. Dadurch wird erreicht, dass der Pleuelkopf 34 ausschließlich in der ersten Drehausrichtung (bzw. in einem relativ kleinen ersten Drehausrichtungsbereich) durch die Montageöffnung bis in das teilkugelförmigen Innenvolumen der Lageraufnahme 44 einschiebbar ist (vgl. Fig. 9) und gleichzeitig nach einer Verdrehung um die Längsachse 52 um einen kleinen Mindestwinkelabstand ein Herausziehen des Pleuelkopfs 34 aus der Lageraufnahme 44 nicht mehr möglich ist, weil der breitere, teilkugelförmige Abschnitt des Pleuelkopfs 34 dann die zwei ebenen Begrenzungsflächen 54 der Montageöffnung innenseitig seitlich überragt (vgl. Fig. 4).

Für die dargestellte Kombination aus Kolben 10 und Pleuel 12 ist vorgesehen, den Pleuel 12 (einschließlich des auf dem Pleuelschaft 36 angeordneten Kolbenunterteils 16) relativ zu dem Kolben 10 bis in eine zweite Drehausrichtung, die einen Winkelabstand zu der ersten Drehausrichtung von ca. 90° aufweist, zu verdrehen (vgl. Fig. 10). In dieser zweiten Drehausrichtung ist der Pleuel 12 formschlüssig mit dem Kolben 10 verbunden. Gleichzeitig ist jedoch noch ein Verschwenken in Grenzen um zumindest die Betriebsschwenkachse 46 möglich.

Um ein ungewolltes Lösen des Pleuels 12 von dem Kolben 10 zu verhindern wird der Pleuel 12 in der zweiten Drehausrichtung mittels des Kolbenunterteils 16, sobald dieses mit dem Kolbenoberteil 14 in der vorgesehenen Weise verbunden ist, gesichert. Hierzu wird das Kolbenunterteil 16 in einem letzten Montageschritt mit einem umlaufenden Befestigungsabschnitt 58 mit innenseitiger Kontaktfläche (das somit eine Aufnahmeöffnung ausbildet) und kreisförmigen Querschnitt, der von einem zentralen Befestigungsteil 60 des Kolbenunterteils 16 ausgebildet ist, auf den korrespondierenden Befestigungsabschnitt 26 des Kolbengrundkörpers 20 des Kolbenoberteils 14 aufgeschoben und dort mittels einer Presspassung fixiert (vgl. Fig. 11). Dazu kann vorgesehen sein, dass das Kolbenunterteil 16 zumindest in dem Bereich des zentralen Befestigungsteils 60 soweit erwärmt und damit aufgeweitet wird, dass der Befestigungsabschnitt 58 des Kolbenunterteils 16 ohne elastische Dehnung auf den Befestigungsabschnitt 26 des Kolbenoberteils 14 aufschiebbar ist, während eine kraftschlüssige Verbindung (die Presspassung) erst nach einem Abkühlen des Kolbenunterteils 16 und einer dann erreichten Temperaturangleichung zwischen Kolbenunterteil 16 und Kolbenoberteil 14 ausgebildet ist.

Der zentrale Befestigungsteil 60 bildet zwei teilkugelförmige Vorsprünge 62 aus (vgl. Fig. 6 und 7), die durch die Montageöffnung bis in das teilkugelförmige Innenvolumen der Lageraufnahme 44 des Kolbenunterteils 16 eingreifen, wenn das Kolbenoberteil 14 und das Kolbenunterteil 16 in der vorgesehenen Weise miteinander verbunden sind. Dabei greifen diese Vorsprünge 62 in Abschnitte der Lageraufnahme 44 ein, in denen der Pleuelkopf 34 zwar infolge der beiden Abflachungen in der ersten Drehausrichtung, nicht jedoch in der zweiten Drehausrichtung angeordnet ist. Die Vorsprünge 62 des Kolbenunterteils 16 verhindern somit ein Zurückdrehen des Pleuelkopfs 34 innerhalb der Lageraufnahme 44 bis in die erste Drehausrichtung und sichern somit gegen ein ungewolltes Lösen des Pleuels 12 von dem Kolben 10.

Im montierten Zustand des Kolbens 10 ist zwischen dem Kolbenoberteil 14 und dem Kolbenunterteil 16 ein umlaufender Spalt 64 ausgebildet, durch den mit einem relativ geringen Materialaufwand eine relativ große Länge (Erstreckung längs der Längsachse 30) für den Kolben 10 realisiert werden kann. Dies wirkt sich im Hinblick auf eine zu erzielende Kippstabilität entsprechend positiv auf das Gewicht des Kolbens 10 aus. Gleichzeitig kann sich dies vorteilhaft auf die Kühlung des Kolbens 10 auswirken, weil eine ausreichende Zufuhr eines Kühlmediums, beispielsweise eines flüssigen Schmiermittels, zu der Außenseite des Kolbengrundkörpers 20 realisiert werden kann. Dadurch kann gleichzeitig auch eine ausreichende Schmierung der Lagerung des Pleuelkopfs 34 innerhalb der Lageraufnahme 44 des Kolbens 10 gewährleistet werden, weil eine ausreichende Menge des Schmiermittels, das der Außenseite des Kolbengrundkörpers 20 zugeführt wurde, über mehrere Zuführöffnungen 66 (vgl. Fig. 4), die in den Kolbengrundkörper 20 eingebracht sind und die die Lageraufnahme 44 mit der Außenseite des Kolbengrundkörpers 20 verbinden, der Lageraufnahme 44 zugeführt werden kann. Weiterhin ergibt sich durch den Spalt 64 eine relativ gute thermische Entkoppelung zwischen Kolbenoberteil 14 und Kolbenunterteil 16. Dadurch kann die Temperatur des Kolbenunterteils 16 relativ gering gehalten werden. Als Folge daraus dehnt sich dieser nur in einem relativ geringen Maße aus, wodurch die Reibung des Kolbens 10 bei dessen Führung in einem Zylinder gering gehalten werden kann.

Das Kolbenunterteil 16 bildet nur in zwei Bereichen, die auf gegenüberliegenden Seiten der Betriebsschwenkachse 46 des Pleuels 12 angeordnet sind, Abschnitte des Kolbenhemds 22 aus. Diese zwei Bereiche, die in den Zeichnungen durch eine Kreuzschraffur hervorgehoben sind, werden jeweils von einem Kontaktabschnitt 72 eines ringförmigen, eine Durchgangsöffnung 78 ausbildenden Teilelements 70 eines Außenteils 68 des Kolbenunterteils 16 ausgebildet, wobei jeweils zwei Verbindungsabschnitte 74 für die Verbindung des dazugehörigen Kontaktabschnitts72 mit dem zentralen Befestigungsteil 60 des Kolbenunterteils 16 vorgesehen sind. Durch diese Ausgestaltung des Kolbenunterteils 16, die nur in den relevanten Abschnitten seiner Umfangsfläche einen Kontakt mit dem für die Aufnahme und Führung des Kolbens 10 vorgesehenen Zylinder vorsieht, kann ebenfalls der Materialeinsatz für die Ausbildung des Kolbens 10 und damit dessen Gewicht gering gehalten werden.

Innerhalb der zwei Bereiche des Kolbenunterteils 16, die Abschnitte des Kolbenhemds 22 ausbilden, ist jeweils ein Spalt 76 ausgebildet. Die Mittellängsachsen dieser Spalte 76 verlaufen in einer (derselben) Ebene, die senkrecht zu der Längsachse 30 des Kolbens 10 ausgerichtet ist. Durch diese Spalte 76 in dem Kolbenunterteil 16 kann wiederum eine Zufuhr eines flüssigen Schmiermittels zu den innen liegenden Bereichen des Kolbens 10, insbesondere zu der Außenseite des Kolbengrundkörpers 20 und damit auch zu der Lagerung des Pleuelkopfs 34 in der Lageraufnahme 44 des Kolbens 12, verbessert werden.

Die Länge (Erstreckung entlang der Längsachse 30) der Kontaktabschnitte72 ist größer gewählt als die Längen der übrigen Bereiche des Kolbenunterteils 16, insbesondere der Verbindungsabschnitte 74 sowie des zentralen Befestigungsteils 60. Dadurch kann bei relativ geringem Materialeinsatz eine ausreichend große Fläche für die Ausbildung der entsprechenden Abschnitte des Kolbenhemds 22 bereitgestellt werden.

### BEZUGSZEICHENLISTE

- 10: Kolben
- 12: Pleuel
- 14: Kolbenoberteil
- 16: Kolbenunterteil
- 18: Kolbenkopf
- 20: Kolbengrundkörper
- 22: Kolbenhemd
- 24: Kolbenboden
- 26: Befestigungsabschnitt des Kolbenoberteils
- 28: Rippen des Kolbengrundkörpers
- 30: Längsachse des Kolbens
- 32: Rippen des Kolbenkopfs
- 34: Pleuelkopf
- 36: Pleuelschaft
- 38: Pleuelauge
- 40: Durchgangsöffnungen in dem Pleuelauge
- 42: Innengewinde in dem Pleuelauge
- 44: Lageraufnahme
- 46: Betriebsschwenkachse des Pleuels
- 48: Längsachse des Pleuelauges
- 50: Abflachung des Pleuelkopfs
- 52: Längsachse des Pleuels
- 54: ebenen Begrenzungswand der Montageöffnung der Lageraufnahme
- 56: teilzylindrische Begrenzungswand der Montageöffnung der Lageraufnahme
- 58: Befestigungsabschnitt des Kolbenunterteils
- 60: Befestigungsteil des Kolbenunterteils
- 62: Vorsprung des Befestigungsteils des Kolbenunterteils
- 64: Spalt zwischen dem Kolbenoberteil und dem Kolbenunterteil
- 66: Zuführöffnung
- 68: Außenteil des Kolbenunterteils
- 70: Teilelement des Außenteils
- 72: Kontaktabschnitt eines Teilelements des Außenteils
- 74: Verbindungsabschnitt eines Teilelements des Außenteils
- 76: Spalt in dem Kolbenunterteil
- 78: Durchgangsöffnung in dem Außenteil des Kolbenunterteils

## Patentansprüche

1. Kombination eines Kolbens (10) und eines schwenkbar in einer Lageraufnahme (44) des Kolbens (10) gelagerten Pleuels (12), wobei der Kolben (10) ein den Kolbenboden (24) ausbildendes Kolbenoberteil (14) und ein zumindest einen Abschnitt des Kolbenhemds (22) ausbildendes Kolbenunterteil (16) umfasst, die im Rahmen einer Montage der Kombination verbindbar sind, und wobei ein Pleuelkopf (34) des Pleuels (12) in einer ersten Drehausrichtung in die Lageraufnahme (44) einsetzbar ist und in einer zweiten, um einen Winkelabstand um die Längsachse (52) des Pleuels (12) verdrehten Drehausrichtung gegen ein Lösen aus der Lageraufnahme (44) gesichert ist, **dadurch gekennzeichnet, dass** der Pleuel (12) nach einer Montage der Kombination mittels des dann mit dem Kolbenoberteil (14) verbundenen Kolbenunterteils (16) gegen ein Verdrehen von der zweiten Drehausrichtung bis in die erste Drehausrichtung gesichert ist, indem das Kolbenunterteil (16) einen Vorsprung (62) ausbildet, der nach einer Montage der Kombination in einen Abschnitt der Lageraufnahme (44) eingreift, in dem ein Abschnitt des Pleuelkopfs (34) in der ersten Drehausrichtung angeordnet und in der zweite Drehausrichtung nicht angeordnet ist.

2. Kombination gemäß Anspruch 1, **dadurch gekennzeichnet, dass** der Pleuel (12) einen teilkugelförmigen Pleuelkopf (34) mit zumindest einer seitlichen Abflachung (50) aufweist.

3. Kombination gemäß einem der vorhergehenden Ansprüche, **dadurch gekennzeichnet, dass** auch das Kolbenoberteil (14) einen Abschnitt des Kolbenhemds (22) ausbildet, wobei zwischen dem von dem Kolbenoberteil (14) ausgebildeten Abschnitt des Kolbenhemds (22) und dem von dem Kolbenunterteil (16) ausgebildeten Abschnitt des Kolbenhemds (22) ein zumindest teilweise um die Längsachse (30) des Kolbens (10) umlaufender Spalt (64) ausgebildet ist.

4. Kombination gemäß einem der vorhergehenden Ansprüche, **dadurch gekennzeichnet, dass** das Kolbenoberteil (14) einen sich mit zunehmender Entfernung von dem Kolbenboden (24) verjüngenden Kolbengrundkörper (20) aufweist, dessen freies Ende zur Verbindung mit dem Kolbenunterteil (16) vorgesehen ist.

5. Kombination gemäß Anspruch 4, **dadurch gekennzeichnet, dass** die Außenseite des Kolbengrundkörpers (20) mit sich entlang der Längsachse (30) des Kolbens (10) erstreckenden Rippen (28) versehen ist.

6. Kombination gemäß einem der vorhergehenden Ansprüche, **dadurch gekennzeichnet, dass** eine Verbindung zwischen dem Kolbenoberteil (14) und dem Kolbenunterteil (16) als Presspassung ausgebildet ist.

7. Kombination gemäß einem der vorhergehenden Ansprüche, **dadurch gekennzeichnet, dass** das Kolbenunterteil (16) einen zentralen Befestigungsteil (60) und einen einen Abschnitt des Kolbenhemds (22) ausbildenden Außenteil (68) umfasst, wobei zwischen dem Befestigungsteil(60) und dem Außenteil (68) eine sich entlang der Längsachse (30) des Kolbens (10) erstreckende Durchgangsöffnung (78) ausgebildet ist.

8. Kombination gemäß einem der vorhergehenden Ansprüche, **dadurch gekennzeichnet, dass** das Kolbenunterteil (16) in zwei voneinander separierten Bereichen, die auf gegenüberliegenden Seiten einer Betriebsschwenkachse (46) des Pleuels (12) angeordnet sind, Abschnitte des Kolbenhemds (22) ausbildet.

9. Kombination gemäß Anspruch 7 und 8, **dadurch gekennzeichnet, dass** von dem Befestigungsteil (60) zwei ringförmige Teilelemente (70) des Außenteils(68) abgehen.

10. Kombination gemäß einem der vorhergehenden Ansprüche, **dadurch gekennzeichnet, dass** der von dem Kolbenunterteil (16) ausgebildete Abschnitt des Kolbenhemds (22) durch mindestens einen Spalt (76) in mindestens zwei Teilabschnitte separiert ist.

11. Kombination gemäß Anspruch 10, **dadurch gekennzeichnet, dass** der oder die Spalte (76) in einer oder mehreren senkrecht zur Längsachse (30) des Kolbens (10) ausgerichteten Ebenen verlaufen.

12. Kombination gemäß einem der vorhergehenden Ansprüche, **gekennzeichnet durch** eine die Lageraufnahme (44) mit einer Außenseite des Kolbenoberteils (14) und/oder einer Außenseite des Kolbenunterteils (16) verbindende Zuführöffnung (66) für ein Schmiermittel.

13. Verfahren zur Montage einer Kombination eines Kolbens (10) und eines Pleuels (12) gemäß einem der vorhergehenden Ansprüche, **dadurch gekennzeichnet, dass**
- der Pleuelkopf (34) in der ersten Drehausrichtung in die Lageraufnahme (44) des Kolbens (10) eingesetzt wird,
- der Pleuelkopf (34) anschließend bis in die zweite Drehausrichtung verdreht wird und
- daran anschließend das Kolbenunterteil (16) mit dem Kolbenoberteil (14) verbunden wird.

14. Verfahren gemäß Anspruch 13, **dadurch gekennzeichnet, dass** das Kolbenunterteil (16) gemeinsam mit dem Pleuelkopf (34) verdreht wird.

## Claims

1. Combination of a piston (10) and a connecting rod (12) mounted in a pivotable manner in a bearing receptacle (44) of the piston (10), wherein the piston (10) comprises an upper piston part (14) forming the piston head (24) and a piston lower part (16) forming at least one section of the piston skirt (22), which are connectible within the framework of the assembly of the combination, and wherein a connecting rod head (34) of the connecting rod (12) can be inserted in a first rotational alignment into the bearing receptacle (44) and is secured against loosening from the bearing receptacle (44) in a second rotational alignment twisted by an angular distance about the longitudinal axis (52) of the connecting rod (12), **characterized in that** the connecting rod (12), after assembly of the combination by means of the lower piston part (16) connected to the upper piston part (14), is secured against twisting from the second rotational alignment into the first rotational alignment, by the piston lower part (16) forming a projection (62) which after assembly of the combination engages in a section of the bearing receptacle (44), in which a section of the connecting rod head (34) is arranged in the first rotational alignment and is not positioned in the second rotational alignment.

2. Combination according to claim 1, **characterized in that** the connecting rod (12) has a part-spherical connecting rod head (34) with at least one lateral flat area (50).

3. Combination according to any one of the preceding claims, **characterized in that** the upper piston part (14) also forms a section of the piston skirt (22), wherein a gap (64) is formed which extends at least partially around the longitudinal axis (30) of the piston (10), being formed between the section of the piston skirt (22) formed by the upper piston part (14) and the section of the piston skirt (22) formed by the lower piston part (16).

4. Combination according to any one of the preceding claims, **characterized in that** the upper piston part (14) has a piston base body (20) which tapers with increasing distance from the piston head (24) and whose free end is provided for connection to the lower piston part (16).

5. Combination according to claim 4, **characterized in that** the outer side of the piston base body (20) is provided with ribs (28) extending along the longitudinal axis (30) of the piston (10).

6. Combination according to any one of the preceding claims, **characterized in that** a connection is formed between the upper piston part (14) and the lower piston part (16) as an interference fit.

7. Combination according to any one of the preceding claims, **characterized in that** the lower piston part (16) comprises a central fastening part (60) and a outside part (68) forming a section of the piston skirt (22), wherein a through-opening (78) extending along the longitudinal axis (30) of the piston (10) is formed between the fastening part (60) and the outside part (68).

8. Combination according to one of the preceding claims, **characterized in that** the lower piston part (16) forms sections of the piston skirt (22) in two mutually separated regions which are arranged on opposite sides of an operating pivot axis (46) of the connecting rod (12).

9. Combination according to claim 7 and 8, **characterized in that** two annular partial elements (70) of the outside part (68) protrude from the fastening part (60).

10. Combination according to any one of the preceding claims, **characterized in that** the section of the piston skirt (22) formed by the lower piston part (16) is separated into at least two partial sections by at least one gap (76).

11. Combination according to claim 10, **characterized in that** the gap or the gaps (76) extend in one or more planes oriented perpendicular to the longitudinal axis (30) of the piston (10).

12. Combination according to one of the preceding claims, **characterized by** a supply opening (66) for a lubricant connecting the bearing receptacle (44) to an outer side of the upper piston part (14) and/or an outer side of the lower piston part (16).

13. Method for assembling a combination of a piston (10) and a connecting rod (12) according to one of the preceding claims, **characterized in that**
- the connecting rod head (34) is inserted into the bearing receptacle (44) of the piston (10) in the first rotational alignment,
- the connecting rod head (34) is then rotated in the second rotational alignment; and
- the lower piston part (16) is connected to the upper piston part (14).

14. Method according to claim 13, **characterized in that** the lower piston part (16) is rotated together with the connecting rod head (34).

## Revendications

1. Combinaison d'un piston (10) et d'une bielle (12) montée de façon à pouvoir pivoter dans un logement de palier (44) du piston (10), le piston (10) comprenant une partie supérieure de piston (14) formant un fond de piston (24) et une partie inférieure de piston (16) formant au moins une section de la jupe de piston (22), qui peuvent être raccordés dans le cadre d'un montage de la combinaison et une tête de bielle (34) de la bielle (12) pouvant, dans une première orientation de rotation, être insérée dans le logement de palier (44) et étant, dans une deuxième orientation de rotation tournée d'une distance angulaire autour de l'axe longitudinal (52) de la bielle (12), sécurisée contre un dégagement du logement de palier (44), **caractérisée en ce que** la bielle (12), après un montage de la combinaison, est sécurisée au moyen de la partie inférieure de piston (16) alors raccordée à la partie supérieure de piston (14) contre une rotation de la deuxième orientation de rotation jusqu'à la première orientation de rotation, par la partie inférieure de piston (16) formant une saille (62) qui entre en prise, après un montage de la combinaison, avec une section du logement de palier (44) dans laquelle une section de la tête de bielle (34) est disposée dans la première orientation de rotation et n'est pas disposée dans la deuxième orientation de rotation.

2. Combinaison selon la revendication 1, **caractérisée en ce que** la bielle (12) présente une tête de bielle (34) en forme de partie de sphère comprenant au moins un aplatissement latéral (50).

3. Combinaison selon l'une quelconque des revendications précédentes, **caractérisée en ce que** la partie supérieure de piston (14) forme aussi une section de la jupe de piston (22), une fente (64) s'étendant au moins partiellement autour de l'axe longitudinal (30) du piston (10) étant formée entre la section de la jupe de piston (22) formée par la partie supérieure de piston (14) et la section de la jupe de piston (22) formée par la partie inférieure de piston (16).

4. Combinaison selon l'une quelconque des revendications précédentes, **caractérisée en ce que** la partie supérieure de piston (14) présente un corps de base de piston (20) se rétrécissant à mesure que la distance du fond de piston (24) augmente, dont l'extrémité libre est conçue pour le raccord à la partie inférieure de piston (16).

5. Combinaison selon la revendication 4, **caractérisée en ce que** la face extérieure du corps de base de piston (20) est munie de nervures (28) s'étendant le long de l'axe longitudinal (30) du piston (10).

6. Combinaison selon l'une quelconque des revendications précédentes, **caractérisée en ce qu'**un raccord entre la partie supérieure de piston (14) et la partie inférieure de piston (16) est formé comme ajustement serré.

7. Combinaison selon l'une quelconque des revendications précédentes, **caractérisée en ce que** la partie inférieure de piston (16) comprend une partie de fixation (60) centrale et une partie extérieure (68) formant une section de la jupe de piston (22), une ouverture de passage (78) s'étendant le long de l'axe longitudinal (30) du piston (10) étant formée entre la partie de fixation (60) et la partie extérieure (68).

8. Combinaison selon l'une quelconque des revendications précédentes, **caractérisée en ce que** la partie inférieure de piston (16) forme, dans deux zones séparées l'une de l'autre, lesquelles sont disposées sur des côtés opposés d'un axe de pivotement de fonctionnement (46) de la bielle (12), des sections de la jupe de piston (22).

9. Combinaison selon la revendication 7 ou 8, **caractérisée en ce que** deux éléments partiels (70) de forme annulaire de la partie extérieure (68) s'étendent à partir de la partie de fixation (60).

10. Combinaison selon l'une quelconque des revendications précédentes, **caractérisée en ce que** la section de la jupe de piston (22) formée par la partie inférieure de piston (16) est séparée par au moins une fente (76) en au moins deux sections partielles.

11. Combinaison selon la revendication 10, **caractérisée en ce que** la ou les fentes (76) s'étendent dans un ou plusieurs plans orientés perpendiculairement à l'axe longitudinal (30) du piston (10).

12. Combinaison selon l'une quelconque des revendications précédentes, **caractérisée par** une ouverture d'amenée (66) pour un lubrifiant raccordant le logement de palier (44) à une face extérieure de la partie supérieure de piston (14) et/ou une face extérieure de la partie inférieure de piston (16).

13. Procédé pour le montage d'une combinaison d'un piston (10) et d'une bielle (12) selon l'une quelconque des revendications précédentes, **caractérisé en ce que**
- la tête de bielle (34) est insérée, dans la première orientation de rotation, dans le logement de palier (44) du piston (10),
- la tête de bielle (34) est ensuite tournée jusqu'à la deuxième orientation de rotation et
- à la suite de cela la partie inférieure de piston (16) est raccordée à la partie supérieure de piston (14).

14. Procédé selon la revendication 13, **caractérisé en ce que** la partie inférieure de piston (16) est tournée conjointement avec la tête de bielle (34).
